# FASCICULE DE BREVET EUROPEEN

(11) **EP 2 066 183 B1**
(45) Date de publication et mention de la délivrance du brevet: **01.02.2017**
(21) Numéro de dépôt: 07823473.9
(22) Date de dépôt: 04.09.2007
(51) Int. Cl.: A23G 1/00

(54) **PROCEDE D'ELABORATION DE CHOCOLATS ET/OU COMPOSITIONS CHOCOLATEES/CACAOTEES**
VERFAHREN ZUR HERSTELLUNG VON SCHOKOLADE
METHOD FOR ELABORATING CHOCOLATE

(30) Priorité: 04.09.2006 EP 06291395; 17.10.2006 CH 16482006
(43) Date de publication de la demande: 10.06.2009
(73) Titulaire: Barry Callebaut AG, 8005 Zürich (CH)
(72) Inventeur: BOUVIER, Philippe, E-03540 Alicante (ES); DETALLE, Valentine, F-78000 Versailles (FR)
(74) Mandataire: Tarrère, Blandine
(86) Numéro de dépôt international: PCT/FR2007/001432
(87) Numéro de publication internationale: WO 2008/029021

(56) Documents cités:
- DR RUDOLF EM. RANDEBROCK: "Neue Ergebnisse der beschreibenden statistischen Prüfungsmethode bei der Ermittlung der Geschmackseigenschaften von Schokoloademischungen" DEUTSCHE LEBENSMITTEL-RUNDSCHAU, vol. 74, no. 6, 1978, pages 219-227, XP008076343
- BERNARD W. MINIFIE: "Chocolate, Cocoa and Confectionery: Science and Technology" 1970, J. & A. CHURCHILL , LONDON, GB , XP002424951 page 20 - page 24

## Description

La présente invention est relative à un procédé d'élaboration de chocolats d'assemblage ou de compositions chocolatées/cacaotées à partir d'une banque d'ingrédients, les ingrédients désignant notamment un chocolat ou une masse de cacao. L'invention propose également un dispositif permettant la mise en oeuvre du procédé selon l'invention.

L'élaboration de chocolats à partir d'une sélection de cacaos de différentes provenances constitue le travail quotidien du chocolatier professionnel.

Jusqu'à maintenant, ce processus de création était essentiellement empirique. En effet, les professionnels, se fiant à leur expérience et à leur intuition, choisissent les chocolats ou les masses de cacao qu'ils désirent utiliser pour élaborer leurs nouvelles recettes. Après assemblage desdits ingrédients, le résultat est évalué par dégustation.

Dans la publication du Dr R.E. Randebrock "Neue Ergebnisse der beschreibenden statistischen Prüfungsmethode bei der Ermittlung der Geschmackseigenschaften von Schokoloademischungen" (DEUTSCHE LEBENSMITTEL-RUNDSCHAU, vol. 74, no. 6, 1978, pages 219-227)il est décrit une méthode d'évaluation des descripteurs de goût de compositions chocolatés sur une échelle de valeur de 0 à 9.

La mise au point d'une recette jugée satisfaisante s'effectue après plusieurs essais d'assemblage infructueux, et souvent le concours du hasard.

L'impossibilité de prédire le résultat d'un assemblage de chocolats et/ou de masses limite considérablement les possibilités des créateurs, qui sont obligés d'opérer par tâtonnement. La prépondérance du hasard dans l'élaboration d'une nouvelle recette de chocolats peut faire perdre ainsi beaucoup de temps et de matières premières, la validation de la recette ne pouvant être opérée qu'à l'étape finale du processus créatif.

De plus, lorsque le créateur se fixe un objectif à atteindre en termes de goût, à il n'existe aucun procédé lui permettant de s'affranchir du hasard et d'atteindre de manière contrôlée le résultat qu'il recherche.

Au vu de ces difficultés, les inventeurs ont tenté de mettre au point un procédé et un dispositif permettant d'assister les professionnels dans l'élaboration d'un chocolat d'assemblage, ledit procédé permettant un contrôle de l'évolution des goûts au cours du processus créatif.

L'invention propose donc un procédé par ordinateur permettant l'élaboration d'une recette de chocolat et/ou de composition chocolatée/cacaotée à partir d'une banque de n ingrédients Pⱼ, les ingrédients Pⱼ désignant notamment un chocolat ou une masse de cacao, caractérisé en ce que :
- on définit une échelle de valeur E permettant d'attribuer une valeur numérique vᵢⱼ pour le descripteur de goût Gᵢ de chaque ingrédient Pⱼ, l'ensemble des valeurs vᵢⱼ définissant le profil de goût (s) de l'ingrédient Pⱼ,
- on détermine une fonction f, telle que v_{ic}=f (kⱼ, vᵢⱼ), f désignant l'ensemble des règles permettant de calculer les valeurs v_{ic} caractérisant le goût d'un assemblage C de chocolats et/ou masses de cacao tel que C= ∑ (j = 0→n) kⱼPⱼ, kⱼ, compris entre 0 et 1, bornes incluses, étant un coefficient désignant la proportion de l'ingrédient Pⱼ dans l'assemblage C,
- on choisit une base chocolat ou masse de cacao B, dont les valeurs v_{ib} ont été définies,
- on utilise la fonction f pour déterminer les nouvelles valeurs des coefficients kⱼ, vᵢⱼ dans la mise en oeuvre de deux méthodes alternatives a et/ou b telles que :
   a. on choisit la nouvelle valeur v_{lb}' du descripteur de goût Gₗ que l'on souhaite modifier dans la base B, on applique une étape de transformation dans laquelle on modifie au moins deux coefficients kⱼ que l'on calcule afin que f(kⱼ, vᵢⱼ) atteigne la valeur v_{lb}' , puis on calcule l'ensemble des valeurs v_{ib}' des descripteurs de goût Gᵢ, résultant de la modification des coefficients kⱼ,
   b. on modifie au moins deux coefficients kⱼ de la base B puis, on calcule l'ensemble des valeurs v_{ib}' des goûts Gᵢ.

Par composition chocolatée/cacaotée, on vise en particulier une composition alimentaire telle qu'un fourrage, un enrobage, etc., comportant au moins un ingrédient issu du cacao.

Par «Pⱼ», on désigne les ingrédients susceptibles d'entrer dans la composition d'un chocolat d'assemblage. Il s'agit en particulier de tous les ingrédients pouvant être ajoutés en phase finale d'un chocolat, c'est-à-dire ceux qui n'ont pas besoin de subir les différentes étapes du procédé de fabrication du chocolat tel le conchage. Il s'agit en particulier de chocolats pure origine, de chocolats d'assemblage, de chocolats de couverture, de masses de cacao, de chocolats aromatisés, de chocolats au lait, de chocolats blancs, de beurre de cacao, de compositions chocolatées/cacaotées ou d'additifs tel que des arômes. Dans les ingrédients Pⱼ, la sélection des chocolats a été faite afin de pouvoir obtenir la plus large palette des goûts possible par assemblage.

Par « n », on désigne le nombre d'ingrédients mis à disposition du créateur pour élaborer le chocolat. « n » est au moins égal à 2 et n'a pas de borne supérieure. Avantageusement, on pourra utiliser entre 15 et 150 ingrédients.

Par « Gᵢ », on désigne les descripteurs de goût dont on va suivre l'évolution au cours du processus créatif. La notation « Gₗ» est quant à elle utilisée pour identifier un descripteur de goût Gₗ spécifique parmi les descripteurs de goût Gᵢ. On citera à titre d'exemples de descripteurs de goût Gᵢ : acide, équilibré, orange, acidulé, fade, parfumé, âcre, farineux, persistant, agressif, fer, piquant, alcalin, fermenté, plat, alcool, fin, pomme, amer, fort, potassé, âpre, fraîcheur, praliné, aromatique, fruité, rance, artificiel, fugace, réglisse, astringent, fumé, renfermé, biscuité, graisse, rond, brûlé, gras, salé, cacao, grillé, sucré, café, lait, tabac, caramel, concentré, torréfié, carton, liqueur, typé, chocolat, masse, vache, confiserie, médicament, vanille, corsé, menthe, velouté, crème, miel, vert, cuit, moisi, vieux, doux, neutre, vinaigre, épicé, noisette... Ces différents descripteurs de goût ont été révélés lors de la mise en place des profils sensoriels (quantification des flaveurs des chocolats) par les inventeurs (voir exemple 1). Il s'agit alors d'en sélectionner un nombre limité afin d'établir une base de descripteurs de goût.

L'ensemble des descripteurs de goût utilisés peut être spécifique de la nature du chocolat à créer. En particulier, on utilisera des descripteurs différents pour l'élaboration de chocolat noir, au lait ou blanc.

Pour l'élaboration d'un chocolat noir, les descripteurs de goût Gᵢ peuvent avantageusement être choisis parmi le groupe contenant cacao, amer, sucré, acide, fruité, potassé, torréfié, gras, fumé, brûlé, alcool, médicament, café, persistant, astringent, carton, grillé, aromatique. De préférence, ils sont choisis parmi le groupe contenant cacao, sucré, fruité, aromatique, grillé, acide, amer. En effet, cette association de descripteurs de goût Gᵢ s'est révélée particulièrement pertinente pour caractériser l'ensemble des goûts d'un chocolat noir. Cependant, une autre association pourrait également être aussi pertinente. En effet, certains goûts se recoupant entre eux, plusieurs combinaisons de descripteurs peuvent être utilisées avec un résultat comparable. A titre d'exemple, la flaveur « acidulée » est également en partie représentée par les saveurs « fruité » et « acide ». Il s'agit donc de définir un ensemble de descripteurs de goût Gᵢ établissant une base pertinente de description d'un chocolat donné. Par ailleurs, le nombre de descripteurs n'est pas limité. Afin de permettre une familiarisation efficace du professionnel avec ces descripteurs, un nombre limité est recommandé. Avantageusement, on utilisera entre 5 et 10 descripteurs.

Pour l'élaboration d'un chocolat au lait, les descripteurs de goût Gᵢ préférés sont choisis parmi le groupe contenant lait, sucré, cacao, piquant, gras, caramel, noisette, vanille, miel, biscuité, rance, fumé, astringent, carton, tandis que pour l'élaboration d'un chocolat blanc, ceux-ci sont préférentiellement choisis parmi le groupe contenant lait, sucré, vanille, miel, caramel, fruité, alcool, piquant, cuit, rance.

En outre, les descripteurs Gᵢ peuvent également permettre de caractériser la texture en bouche du chocolat. Dans ce cas, les descripteurs Gᵢ peuvent être choisis dans le groupe de textures suivant : cassant, ferme, mou, cassure, franche, fin, onctueux, cireux, fondant, pâteux, collant, friable, râpeux, compact, granuleux, rêche, crémeux, gras, sableux, croquant, grossier, sec, dur, lisse, tendre, épais, moelleux...

Avantageusement, on choisira les descripteurs parmi le groupe constitué de cassant, croquant, mou, gras, sec, fin, grossier, fondant, collant, onctueux et de préférence, on utilisera le groupe de descripteurs suivant : cassant, collant et fin.

La valeur du descripteur Gᵢ dans l'ingrédient Pⱼ est représentée par la notation « vᵢⱼ ». Cette notation est également utilisée pour désigner, une fois calculée, la valeur du descripteur Gᵢ dans le chocolat d'assemblage final ou en cours d'élaboration, ledit chocolat étant désigné ci-après par les lettres « C » (chocolat d'assemblage en général, notation «v_{ic}») ou «B'» (chocolat d'assemblage en cours d'élaboration, notation « v_{ib}' »).

L'exemple 1 donne un aperçu du type de notation pouvant être utilisé. Il s'agit dans cet exemple d'une notation s'échelonnant sur des valeurs allant de 0 à 6. Il est tout à fait possible d'utiliser un autre type de notation (code de gradation de couleurs, par exemple), et une autre échelle (de 0 à 10, par exemple).

Par « f », on désigne l'ensemble des règles de calcul régissant l'évolution d'un goût Gᵢ donné au cours d'un assemblage. Ces règles peuvent se regrouper sous une seule fonction applicable à l'ensemble des descripteurs. Cependant, il est possible d'affiner ces règles en fonction d'un descripteur spécifique. « f » correspondra alors à l'ensemble des fonctions fᵢ régissant les évolutions des goûts Gᵢ au cours du processus de création du chocolat d'assemblage.

Par « kⱼ », on vise la proportion de l'ingrédient Pⱼ dans le chocolat d'assemblage. La somme des kⱼ est donc égale à 1 et les valeurs de kⱼ sont comprises entre 0 et 1, bornes incluses. Quand kⱼ est égal à 0, l'ingrédient Pⱼ est absent du chocolat d'assemblage. Quand kⱼ est égal à 1, seul l'ingrédient Pⱼ est présent dans la composition. Ce dernier cas n'est en général possible que lorsqu'on part d'une base B consistant uniquement en un ingrédient Pⱼ.

Par « B », on désigne la base à partir de laquelle on va créer le chocolat d'assemblage. Cette base peut être choisie parmi les chocolats d'origine pure (par exemple un chocolat pure origine Tanzanie) ou les chocolats d'assemblage. Les bases constituées d'un chocolat d'assemblage se distinguent en deux catégories : les chocolats d'assemblage « classiques », qui sont des chocolats dont les propriétés organoleptiques sont harmonieuses et les chocolats d'assemblage « typés », qui ont été élaborés de manière à rendre au moins un goût Gᵢ prédominant. Cette prédominance se traduit, dans le système de notation, par une ou plusieurs valeurs vᵢⱼ situées au-dessus voire très au-dessus de la moyenne. Pour la création de chocolats au lait, il est également possible de partir de chocolats au lait d'assemblage « classiques » ou « typés» . Avantageusement, les chocolats au lait pourront avoir un goût caramel, lacté ou cacaoté prédominant. Selon une alternative; des bases pré-établies de chocolat au lait peuvent être créées, comportant très peu de masse de cacao (entre 5 et 15%), afin de pouvoir choisir dans les ingrédients à ajouter des chocolats noirs.

L'intérêt des bases typées est d'orienter le créateur dans l'élaboration de son goût. Ces bases typées sont donc particulièrement adaptées à la méthode « a. ». Lorsque la création est initiée à l'aide de la méthode « b. », il peut être avantageux en revanche d'utiliser une base de chocolat d'assemblage, en particulier, des chocolats d'origine pure.

Un exemple de chocolat type : grillé avec une légère note acide
- 60% Chocolat Côte d'Ivoire,
- 40% Chocolat Papouasie.

Avantageusement, les méthodes a. et b. sont utilisées séparément ou alternativement et peuvent être répétées jusqu'à l'obtention d'un chocolat d'assemblage C au profil de goût satisfaisant.

La méthode a. est également désignée ci-après sous l'appellation « méthode analytique ». Cette méthode permet en effet d'indiquer le résultat à atteindre en termes de valeur vᵢⱼ de goût Gᵢ et dans la mesure du possible, une ou plusieurs solutions seront proposées pour atteindre cet objectif. Il est à noter que certains objectifs ne peuvent être atteints. En particulier, en fonction des ingrédients Pⱼ et des descripteurs de goût Gᵢ sélectionnés, les valeurs vᵢⱼ sont limitées. En effet, pour un descripteur de goût Gᵢ donné, la valeur vᵢⱼ aura comme borne supérieure la valeur vᵢⱼ du composé Pⱼ ayant la valeur vᵢⱼ la plus élévée et comme borne inférieure la valeur vᵢⱼ du composé Pⱼ ayant la valeur vᵢⱼ la plus faible.

La méthode b. est aussi désignée ci-après sous l'appellation « méthode empirique ». Par cette dénomination, on indique que le créateur souhaite ajouter une proportion d'un ingrédient dans l'assemblage de chocolat et constater l'effet de cet ajout sur l'ensemble des valeurs vᵢⱼ des descripteurs de goût Gᵢ. Le choix de cet ajout peut être dirigé grâce aux indications additionnelles éventuellement mises à sa disposition. Ces éléments seront mieux détaillés dans l'explication du dispositif ci-après.

Lors du processus de création du chocolat d'assemblage, le créateur peut, comme il le souhaite, utiliser indifféremment l'une des deux méthodes à chaque étape du processus. Il peut également n'utiliser que la méthode analytique ou que la méthode empirique.

Dans la pratique, le créateur prend connaissance du profil de goût (valeurs vᵢⱼ pour l'ensemble des descripteurs Gᵢ) de la base B ou du chocolat C en cours d'élaboration grâce à l'ensemble des notes vᵢⱼ présentées par une interface installée sur l'ordinateur mettant en oeuvre le procédé selon l'invention. Sur cette interface, le créateur a alors la possibilité de modifier au moyen d'un curseur, l'une quelconque des valeurs vᵢⱼ ou de modifier la proportion (kⱼ) d'au moins un ingrédient Pⱼ.

A chaque étape, l'ordinateur recalcule au moins un profil de goûts- et le propose au créateur. Si celui-ci valide un profil, la recette du chocolat ainsi créé est donnée (ensemble des valeurs kⱼ des composés Pⱼ).

Avantageusement, l'étape de transformation de la méthode a. peut être réalisée comme suit :
- quand v_{lb}' > f(kⱼ, vᵢⱼ), alors on choisit parmi les ingrédients Pⱼ possédant une valeur vᵢⱼ > v_{lb}' au moins un ingrédient Pₛₑₗ₊, et l'on calcule la (les) valeur(s) kₛₑₗ₊ de (des) l' ingrédient (s) Pₛₑₗ₊ devant être introduit (s) dans la base B permettant d'atteindre la valeur v_{lb}', puis la (les) valeur (s) kₛₑₗ₊ ayant été déterminée (s) et au moins une valeur kⱼ modifiée, dans laquelle j≠sel+, on calcule ensuite éventuellement l'ensemble des nouvelles valeurs v_{ib}' pour les autres goûts Gᵢ, définissant ainsi le nouveau profil de goût(s) du chocolat B' obtenu,
- quand v_{lb}' < f(kⱼ, vₗⱼ), alors on choisit parmi les ingrédients Pⱼ possédant une valeur vₗⱼ < v_{lb}' au moins un ingrédient Pₛₑₗ-, et l'on calcule la (les) valeur (s) kₛₑₗ₋ de (des) l' ingrédient (s) Pₛₑₗ₋ devant être introduit (s) dans la base B permettant d'atteindre la valeur v_{lb}', puis la (les) valeur (s) kₛₑₗ- ayant été déterminée (s) et au moins une valeur kⱼ modifiée, dans laquelle j≠sel-, on calcule ensuite éventuellement l'ensemble des nouvelles valeurs v_{ib}' pour les autres goûts Gᵢ, définissant ainsi le nouveau profil de goût(s) du chocolat B' obtenu.

Dans le cas où v_{lb}' < f(kⱼ, vₗⱼ), on pourra choisir préférentiellement au moins un ingrédient Pₛₑₗ₋ pour lequel kₛₑₗ₋ est différent de 0, ce qui revient à modifier la proportion d'un ingrédient déjà présent dans la préparation.

Les travaux des inventeurs ont par ailleurs permis d'établir une échelle E de valeur vᵢⱼ linéaire, qui a pour origine la valeur 0 lorsque le goût Gᵢ est absent. Dans ce système de notation, les inventeurs ont mis en évidence une fonction f telle que v_{ic} = ∑(j=0→n) kⱼvᵢⱼ/∑(j=0→n)kⱼ. Cette fonction f peut être appliquée à l'ensemble des descripteurs avec des résultats satisfaisants. Cette fonction f a en effet été établie à l'aide d'un panel de testeurs formés et entraînés. Cette fonction peut également être affinée par l'utilisation d'un ensemble de fonctions fᵢ comme indiquées ci-avant.

Selon un mode de réalisation, au cours de l'étape de transformation,
- on note Pⱼ^{sup} les ingrédients Pⱼ qui ont une valeur vₗⱼ> v_{lb}',
- on augmente un ou plusieurs des coefficients kⱼ des ingrédients Pⱼ^{sup} d'une valeur ε, on choisit parmi les ingrédients Pⱼ pour lesquels kj≠0, ceux qui ont une valeur vₗⱼ < v_{lb}' que l'on note Pⱼ^{inf}, on diminue un ou plusieurs des coefficients kⱼ des ingrédients Pⱼ^{inf} d'une valeur ε, de telle manière que la somme des coefficients kⱼ reste égale à 1 puis on réitère q fois jusqu'à ce que |v_{lb}' - f(kⱼ, vₗj)| < δ.

De manière similaire,
- on note Pⱼ^{inf} les ingrédients Pⱼ qui ont une valeur vₗⱼ < v_{lb}',
- on augmente un ou plusieurs des coefficients kⱼ des ingrédients Pⱼ^{inf} d'une valeur ε, on choisit parmi les ingrédients Pⱼ pour lesquels kⱼ≠0, ceux qui ont une valeur vₗⱼ > v_{lb}' que l'on note Pⱼ^{sup}, on diminue un ou plusieurs des coefficients kⱼ des ingredients Pⱼ^{sup} d'une valeur ε, de telle manière que la somme des coefficients kⱼ reste égale à 1, puis on réitère q fois jusqu'à ce que |v_{lb}'- f(kⱼ, vₗⱼ)|<δ.

Les ingrédients Pⱼ^{sup}, respectivement Pⱼ^{inf}, sont avantageusement choisis parmi les ingrédients possédant les plus fortes valeurs vₗⱼ, respectivement les plus faibles valeurs vₗⱼ.

Afin d'atteindre le résultat souhaité, il est possible de choisir un ou plusieurs Pⱼ^{sup}, respectivement un ou plusieurs Pⱼ^{inf}.

Il n'est pas nécessaire, au cours de l'étape de transformation de se limiter à l'utilisation d'ingrédients déjà présents. Il est effectivement possible d'utiliser des Pⱼ^{sup} et des Pⱼ^{inf} pour lesquelles kⱼ=0 (on introduit alors de nouveaux ingrédients dans le chocolat d'assemblage en cours d'élaboration) et/ou des Pⱼ^{sup} et des Pⱼ^{inf} pour lesquelles kⱼ≠0 (on modifie alors les ingrédients déjà présents dans le chocolat d'assemblage en cours d'élaboration).

Lorsque l'on utilise un unique Pⱼ^{sup}, respectivement un unique Pⱼ^{inf}, la méthode utilisée peut être répétée avec un Pⱼ^{sup}, respectivement Pⱼ^{inf}, différent afin de proposer plusieurs solutions pour une même valeur v_{lb}' donnée.

En effet, la première solution calculée, si elle permet d'atteindre la valeur v_{lb}', peut modifier de manière trop importante d'autres goûts. Disposer de plusieurs solutions permet de choisir la solution qui a le moins d'impact sur les goûts que l'on ne désire pas modifier.

De préférence, dans le cas où v_{lb}' > f(kⱼ, vₗⱼ), on choisira un unique Pⱼ^{sup} et un ou plusieurs Pⱼ^{inf} . En outre, on pourra choisir avantageusement le Pⱼ^{sup} parmi tous les chocolats de la banque d'ingrédients, quelque soit la valeur de kⱼ, c'est-à-dire que soit on introduit dans la composition, un nouvel ingrédient, soit on augmente la proportion d'un ingrédient déjà présent, ceci dans la mesure où ledit ingrédient possède une des valeurs maximum pour le descripteur Gₗ à modifier.

De manière similaire, dans le cas où v_{lb}' < f(kⱼ, vₗⱼ), on choisira de préférence un unique Pⱼ^{sup} pour lequel kⱼ≠0 et un ou plusieurs Pⱼ^{inf} : on sélectionne l'ingrédient présent au moment de la modification et qui présente la note la plus élevée dans le descripteur de goût en question, et, de préférence, on réduit sa proportion au profit d'au moins un autre ingrédient, le moins fort sur ce descripteur, également déjà présent dans la composition (dans ce dernier cas, on choisit également le (s) Pⱼ^{inf} tel (s) que kⱼ≠0) . Une telle manière de procéder permet d'éviter la dilution de l'ensemble des goûts.

Limiter le nombre de Pⱼ^{sup} et/ou de Pⱼ^{inf} utilisés permet un gain de temps dans les calculs effectués. En effet, l'étape de calcul ne doit pas être prépondérante sur les étapes de création du chocolat d'assemblage. A contrario, il peut être avantageux d'utiliser plusieurs Pⱼ^{sup} et/ou plusieurs Pⱼ^{inf} afin d'éviter une évolution trop importante des goûts Gᵢ, autres que le goût Gₗ sur lequel on interagit volontairement.

δ représente la contrainte, c'est-à-direl'écart maximum par rapport à l'objectif à atteindre. Une valeur élevée de δ entraînera l'élaboration d'un chocolat dont le goût peut être éloigné de l'objectif fixé. A l'opposé une valeur trop faible de δ risque de ne jamais être atteinte et risque d'augmenter considérablement les temps de calcul. On utilisera donc préférentiellement un δ d'un ordre de grandeur sensiblement équivalent à la précision de la notation. Dans les exemples ci-après, la notation est établie sur une échelle décimale de 0 à 6, avec une précision à 0,1 près. Par conséquent, dans ces exemples, δ peut être compris dans l'intervalle ]0 ; 0,5] de préférence, δ est égal à 0,1.

Le coefficient s représente l'incrément utilisé pour les itérations utilisées dans la méthode analytique.

Une valeur faible de ε permet l'utilisation d'une valeur faible de δ. En effet si la valeur de ε est trop élevée par rapport à la valeur de δ, le risque existe que la condition |v_{lb}'- f(kⱼ, vₗⱼ) | < δ ne soit jamais remplie. On remarquera que diminuer la valeur de ε augmente le nombre d'itérations et augmente le temps de calcul nécessaire. On utilisera donc préférentiellement un ε compris dans l'intervalle ]0 ; 1]. Dans les exemples ci-après, ε est égal à 0,01.

Les ingrédients Pⱼ peuvent comprendre plusieurs catégories d'ingrédients, en particulier deux catégories : les ingrédients issus de chocolats P_{choc} et les ingrédients issus de masses de cacao Pₘₐₛₛ .

En effet, il faut noter que les masses de cacao Pₘₐₛₛ ont des valeurs vᵢⱼ qui peuvent être plus élevées (voir exemple 1). Si en raison des propriétés physiques des masses de cacao et de leur maniabilité, il est difficile voire impossible de réaliser un assemblage de chocolats uniquement à partir de masses, on constate ici que l'adjonction de masses peut permettre d'atteindre des valeurs v_{lb}' inatteignables par l'utilisation de chocolats seuls.

Dans un premier temps, on peut utiliser uniquement des ingrédients P_{choc} dans la méthode a. et des ingrédients P_{choc} et Pₘₐₛₛ dans la méthode b.

Dans un second temps, dans la méthode a., lorsque l'augmentation ou la diminution de la proportion kⱼ d'un ingrédient Pⱼ^{sup} ou Pⱼ^{inf} ne permet pas d'atteindre la valeur v_{lb}' désirée, on pourra introduire un ingrédient Pₘₐₛₛ. Avantageusement, on introduira le Pₘₐₛₛ correspondant au P_{choc}. Par exemple, on pourra introduire la masse de cacao pure origine Côte d'Ivoire lorsque la modification de la proportion du chocolat pure origine Côte d'Ivoire ne permet pas d'atteindre la valeur v_{lb}' désirée. Avantageusement, on complètera l'ingrédient P_{choc} par un ingrédient Pₘₐₛₛ. On diminue alors la proportion d'un autre ingrédient Pⱼ différent de P_{choc}, pour lequel kⱼ≠0, pour introduire le Pₘₐₛₛ correspondant à P_{choc}.

Par ailleurs, lors de la création de chocolats au lait, il peut être avantageux de renforcer le goût lacté ou miel/caramel, par l'ajout de chocolat blanc. De même, l'ajout de chocolat au lait caramel, permet de renforcer le goût caramel.

Les ingrédients Pⱼ peuvent comprendre une troisième catégorie, appelés additifs, sous la forme de chocolats aromatisés, d'arômes, de compositions chocolatées. A titre d'exemple, on citera le chocolat lait caramel. Les goûts Gᵢ sont également utilisés pour quantifier l'intensité des arômes additionnels.

Dans ce cas les arômes peuvent être des extraits, des zestes, des fruits, des épices telles que des noix râpées ou non, des huiles essentielles. Plus particulièrement, ils peuvent être choisis parmi le groupe comprenant la vanille, le caramel, la fraise, la banane, les fruits rouges, la pomme, le gingembre, la lavande, le citron, l'orange, la cannelle, le café, la poire, le sel, le poivre, les baies roses, la noisette, l'amande, la noix, le thym, des alcools...

En outre, un fois la recette validée, il peut être possible d'ajouter des colorants alimentaires. Ceci est particulièrement avantageux pour l'élaboration d'un chocolat blanc.

L'invention concerne également un dispositif particulièrement adapté pour la mise en oeuvre du procédé décrit ci-avant.

Il s'agit d'un dispositif d'élaboration de chocolat et/ou de composition chocolatée/cacaotée à partir d'une banque d'ingrédients caractérisé en ce qu'il comprend un espace comportant des moyens visuels d'appréciation des goûts et un, ensemble de règles de calcul mises en oeuvre par ordinateur, lesdites règles permettant la détermination de l'évolution de ces moyens visuels au cours du processus d'élaboration du chocolat et/ou de la composition.

De préférence, la banque d'ingrédients sera composée des ingrédients Pⱼ décrits précédemment.

Les moyens visuels d'appréciation des goûts visés ci-avant peuvent être de différentes sortes. Il s'agit principalement de moyens visuels tels qu'une représentation des goûts. Cette représentation peut être chiffrée, colorée. Selon un mode de réalisation avantageux, ces moyens visuels comportent une notation vᵢⱼ des descripteurs de goût Gᵢ sur une échelle E telle que décrite dans le procédé ci-avant.

Ces moyens visuels peuvent comporter également une cartographie de l'ensemble des plantations de cacaoyers mises en relation avec la notation vᵢⱼ des descripteurs de goût Gᵢ caractérisant les goûts des chocolats pure origine issus de ces plantations. Une telle présentation permet au créateur de mettre en corrélation des caractéristiques organoleptiques avec la localisation géographique des plantations. Ceci permet en particulier d'orienter ses choix d'ingrédients dans l'élaboration du chocolat d'assemblage lors de l'utilisation de la méthode empirique. En outre, tous ces moyens visuels sont couplés avec des moyens gustatifs permettant une mise en relation les moyens visuels avec les moyens gustatifs, c'est-à-dire que toute description à l'aide des moyens visuels d'un chocolat, qu'ils soient pure origine ou d'assemblage, est couplée à une possibilité de dégustation. La dégustation d'un certain nombre de chocolat constituera avantageusement une étape préalable à l'élaboration d'un chocolat d'assemblage selon le procédé selon l'invention. En effet, cette étape permet au créateur de se familiariser avec les moyens visuels tels que la notation vᵢⱼ des descripteurs de goût Gᵢ, utilisés lors du processus de création, par exemple en associant les variations d'un goût Gᵢ ressenties lors de la dégustation avec la notation vᵢⱼ proposée.

L'ensemble des règles de calcul consiste de préférence en la fonction f décrite précédemment. En outre, ces règles de calcul seront avantageusement mises en oeuvre à l'aide du procédé selon l'invention.

Enfin, le dispositif selon l'invention comporte en outre un espace d'application permettant la réalisation du chocolat d'assemblage créé et sa dégustation. En effet, le dispositif et le procédé selon l'invention ne constituent que des aides pour la création. En tout état de cause, c'est le créateur qui a le dernier mot en validant ou non sa recette lors de cette étape.

L'invention sera mieux comprise à la lecture de la description faite ci après en référence aux dessins sur lesquels :
- La figure 1 est une représentation graphique des valeurs des goûts d'un chocolat utilisés en tant que base pour la mise en oeuvre du procédé selon l'invention,
- La figure 2 représente l'algorithme d'élaboration de chocolats selon l'invention,
- la figure 3, qui propose les différentes étapes d'interaction avec le logiciel.

Ci-après sont donnés des exemples de recette et d'application du procédé objet de la présente invention.

### Exemple 1 : Détermination des valeurs vi des descripteurs de goût Gᵢ.

Le tableau I ci-dessous présente une liste de chocolats, goûtés par un panel de testeurs entraînés selon la norme Afnor NF 29-021 Mai 1990.

Cette norme a servi de base aux inventeurs pour sélectionner parmi une liste exhaustive, les descripteurs de goût considérés comme les plus pertinents à retenir pour la classification et la dégustation des chocolats.

Elle a également servi de base pour la définition et l'établissement d'une notation pour chaque descripteur de goût Gᵢ ainsi que pour l'entraînement des testeurs. Par exemple, pour chaque descripteur de goût Gᵢ, il leur a été fait déguster des chocolats dont ledit goût est le plus fort ou le plus faible, de manière à fixer les extrema des goûts, puis par dichotomie de les familiariser aux variations des différents goûts.

Les descripteurs de goût à déterminer et noter sont choisis parmi : acide, équilibré, orange, acidulé, fade, parfumé, âcre, farineux, persistant, agressif, fer, piquant, alcalin, fermenté, plat, alcool, fin, pomme, amer, fort, potassa, âpre, fraîcheur, praliné, aromatique, fruité, rance, artificiel, fugace, réglisse, astringent, fumé, renfermé, biscuité, graisse, rond, brûlé, gras, salé, cacao, grillé, sucré, café, lait, tabac, caramel, lait, concentré, torréfié, carton, liqueur, typé, chocolat, masse, vache, confiserie, médicament, vanille, corsé, menthe, velouté, crème, miel, vert, cuit, moisi, vieux, doux, neutre, vinaigre, épicé, noisette, cassant, ferme, mou, cassure, franche, fin, onctueux, cireux, fondant, pâteux, collant, friable, râpeux, compact, granuleux, rêche, crémeux, gras, sableux, croquant, grossier, sec, dur, lisse, tendre, épais, moelleux.

Pour la suite des exemples, on utilisera les descripteurs suivants :
- pour un chocolat noir : cacao, sucré, fruité, aromatique, grillé, acide, amer,
- pour un chocolat au lait : lait, sucré, cacao, piquant, gras, caramel, noisette, vanille, miel, biscuité, rance, fumé, astringent, carton, et
- pour un chocolat blanc : lait, sucré, vanille, miel, caramel, fruité, alcool, piquant, cuit, rance.

**Tableau I :**

| | **CACAO** | **SUCRE** | **FRUITE** | **AROMATIQUE** | **GRILLE** | **ACIDE** | **AMER** |
|---|---|---|---|---|---|---|---|
| **CUBA 70%** | 3,9 | 2,6 | 2,3 | 2,8 | 1,4 | 1,1 | 2,6 |
| **TANZANIE 75%** | 4,1 | 2,1 | 3,6 | 3,6 | 1,5 | 2,7 | 2,7 |
| **ST DOMINGUE 70%** | 3,6 | 1,7 | 1,7 | 2,4 | 1,4 | 1,3 | 2,7 |
| **SAO THOME 72%** | **4,5** | 1,1 | 1,2 | 2,3 | 2,9 | 3,5 | 4,3 |

Les chocolats présentés dans le tableau ci-dessus constituent un échantillon des composés Pⱼ à partir desquels le procédé selon l'invention pourra être mis en oeuvre pour la réalisation d'un chocolat noir.

Ce tableau présente l'échelle de valeurs E permettant d'attribuer une valeur numérique vᵢⱼ pour un goût Gᵢ. Ces valeurs ont été déterminées selon la norme décrite ci-dessus par un panel de testeurs entraînés, la valeur étant calculée comme une moyenne des notes attribuées par chacun des testeurs.

Les descripteurs Gᵢ sont ici choisis comme étant : cacao, sucré, fruité, aromatique, grillé, acide, amer.

L'échelle selon laquelle la valeur est attribuée varie de 0 à 6.

Par exemple, pour un chocolat Tanzanie, la valeur vᵢⱼ du goût fruité a été déterminée par le panel de testeur comme étant de 3,6.

Les descripteurs Gi sont ici volontairement restreints au nombre de 7 pour faciliter l'élaboration du chocolat par le créateur et correspondent en fait aux goûts considérés comme les plus remarquables et communs à l'ensemble de composés Pⱼ.

A partir de ce tableau, on peut également éditer un tableau II correspondant pour les pures masses, c'est-à-dire le résultat du broyage des fèves, avant incorporation du sucre. Par exemple, un chocolat Cuba 70% correspond à une pure masse Cuba a laquelle on a rajouté 30% de sucre.

**Tableau II**

| | **CACAO** | **SUCRE** | **FRUITE** | **AROMATIQUE** | **GRILLE** | **ACIDE** | **AMER** |
|---|---|---|---|---|---|---|---|
| **CUBA 100%** | 5,1. | 0,0 | 2,9 | 3,6 | 1,9 | 1,5 | 3,4 |
| **ST DOMINGUE 100%** | 4,6 | 0,0 | 2,2 | 3,2 | 1,9 | 1,7 | 3,5 |
| **TANZANIE 100%** | 5,1 | 0,0 | 4,5 | 4,5 | 1,8 | 3,4 | 3,3 |
| **MEXIQUE 100%** | 5,0 | 0,0 | 4,6 | 3,4 | 3,6 | 2,8 | 3,4 |

Les masses de cacao n'ont pas été notées par un panel de testeurs comme les chocolats. En effet, les inventeurs ont mis en évidence qu'à partir de la version chocolat, la quantité de sucre ajouté réduisait de façon égale l'ensemble des valeurs des autres notes que le sucre. A l'inverse, pour coter une pure masse, on applique à chaque attribut un index équivalent à l'écart en % de cacao entre la version chocolatée et la version 100 %. La note de sucre est alors ramenée évidemment à 0. Cette corrélation a ensuite été validée par le panel de testeurs.

Par exemple, pour un chocolat Tanzanie 75 %, le descripteur de goût Fruité vaut 3,6. Il en résulte que pour le Tanzanie 100 %, le descripteur fruité vaut 3,6 X 1,25 = 4,5.

Pour un chocolat au lait, les goûts seront choisis préférentiellement parmi les neuf suivants : sucré, cacao, lait, fruité, miel/caramel, amer, aromatique, acide, grillé.

### Exemple 2 : Mise en oeuvre de la méthode empirique.

Les inventeurs ont également mis en évidence qu'à partir des valeurs des goûts de plusieurs chocolats, il était possible de déterminer une corrélation pour un mélange de ceux-ci. Il devient dès lors possible, à partir des valeurs des goûts des constituants du mélange de prévoir les valeurs des goûts d'un chocolat obtenu en mélangeant les produits de base présentés dans l'un ou l'autre des tableaux.

Par exemple pour le mélange suivant :
40% de chocolat Cuba,
45% de chocolat Sao Tomé, et,
15% de masse Mexique 100%.

On obtient les valeurs suivantes en effectuant la somme pondérée de la valeur de chaque descripteur :
Cacao 4,3 ; sucré 1,5 ; fruité 2,1 ; aromatique 2,7 ; grillé 2,4 ; acide 2,5 ; amer 3,5.

A titre d'exemple, la valeur aromatique est calculée selon :
0,4 x 2,8 + 0,45 x 2,3 + 0,15 x 3,4 = 2,665 arrondie à 2,7.

Là encore, cette relation pondérée entre les valeurs des composants initiaux et celles du mélange a été extrapolée à partir des résultats du panel de testeurs puis revalidée par ledit panel.

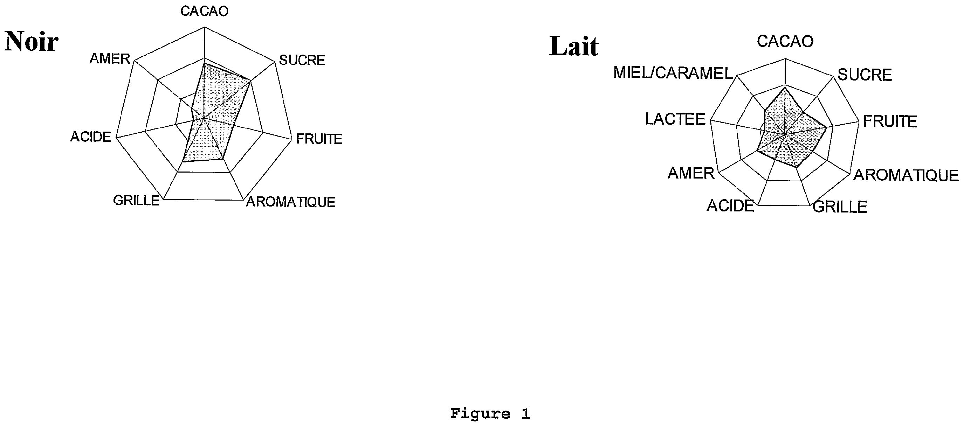

A partir de l'ensemble de ces 7 (ou 9 pour un chocolat au lait) valeurs déterminées ou calculées, on peut ainsi faire une représentation graphique (ou profil de goût) représentative des goûts de chaque chocolat, base ou mélange (figure 1).

Il est ainsi possible d'établir une cartographie sur un planisphère représentant l'ensemble des plantations de cacaoyers correspondant aux différents cacaos pure origine produits sur différents endroits du globe et de leur attribuer la représentation graphique correspondante.

On pourra alors s'attendre à ce que des chocolats d'origine géographique équivalente aient des caractéristiques communes et puissent avoir une représentation graphique sensiblement similaire.

Ex : Un utilisateur peut souhaiter ajouter à sa recette 25% de chocolat Equateur, à la place de 10% de chocolat Cuba et de 15% de chocolat Sao Tomé.

Ainsi en faisant varier suivant cette méthode empirique, un constituant d'un mélange de chocolat dont on connaît les valeurs de goûts, on pourra anticiper les variations de goûts du mélange.

### Exemple 3 : Mise en oeuvre de la méthode analytique.

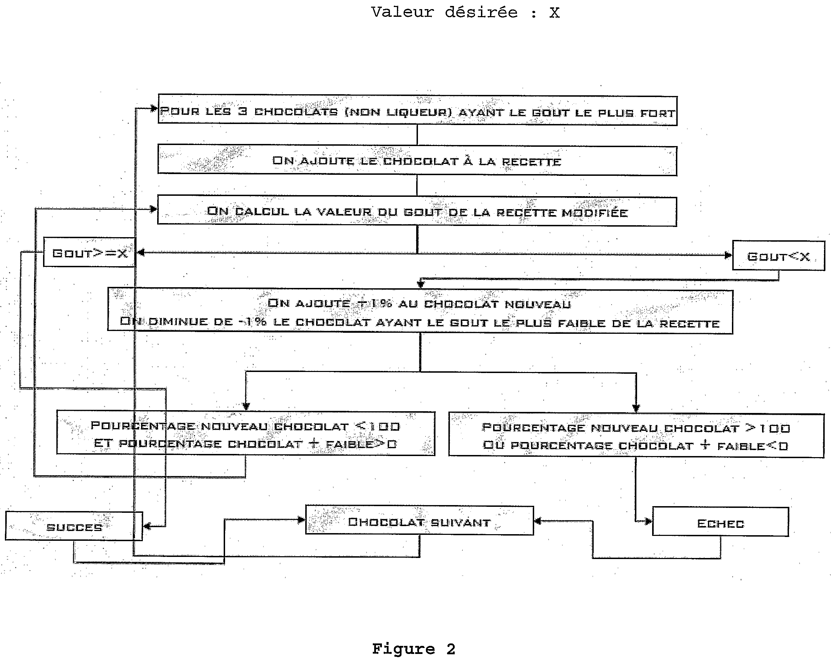

A partir des valeurs présentées dans les tableaux, il est également possible, à l'aide d'un algorithme adéquat (figure 2) de pouvoir préparer un chocolat dont on aura auparavant sélectionné une valeur particulière pour un ou des descripteurs de goût déterminés.

A partir d'une base ou dans le cadre d'une recette en cours d'élaboration, le créateur fixe la valeur à atteindre pour un descripteur donné.

Si la valeur à atteindre est supérieure à la valeur en cours, on détermine les 3 chocolats ayant la note la plus forte pour ce descripteur parmi ceux disponibles dans la banque.

On ajoute alors à la recette chacun des 3 chocolats indépendamment afin d'approcher une valeur approximativement égale, à la valeur à atteindre et on recalcule les valeurs de goût des recettes modifiées. On obtient ainsi trois propositions de recettes parmi lesquelles le créateur peut choisir celle qui convient le mieux à sa recherche de goût.

Si la valeur à atteindre est inférieure à la valeur en cours, on détermine parmi les chocolats présents dans la composition, celui qui a la note la forte pour ce descripteur. On diminue alors la proportion de ce chocolat au profit des autres chocolats présents dans le mélange. On ne dispose alors que d'une seule proposition de recette.

Si le pourcentage du/des nouveaux chocolats s'avère ainsi supérieur à 100% ou si le pourcentage du/des chocolats retirés devient inférieur à 0, la recherche n'a pas de solution.

On peut ajouter des quantités de masse pure pour doper un goût mais cet ajout peut poser des problèmes de rhéologie pour la fabrication d'un chocolat.

Bien entendu, la description faite ci avant n'est pas limitée aux seuls chocolats noirs mais peut également s'appliquer à la réalisation de recette de chocolats au lait ou aux chocolats blancs.

### Exemple 4 : Mise en oeuvre assistée par ordinateur.

A partir de l'ensemble des données collectées et étalonnées et de l'algorithme présenté ci-dessus, les inventeurs ont mis au point une méthode d'élaboration de recette assistée par ordinateur.

Une pièce aménagée et équipée d'un ordinateur et d'un logiciel reproduisant les différentes étapes de l'algorithme est mise à disposition d'un chocolatier.

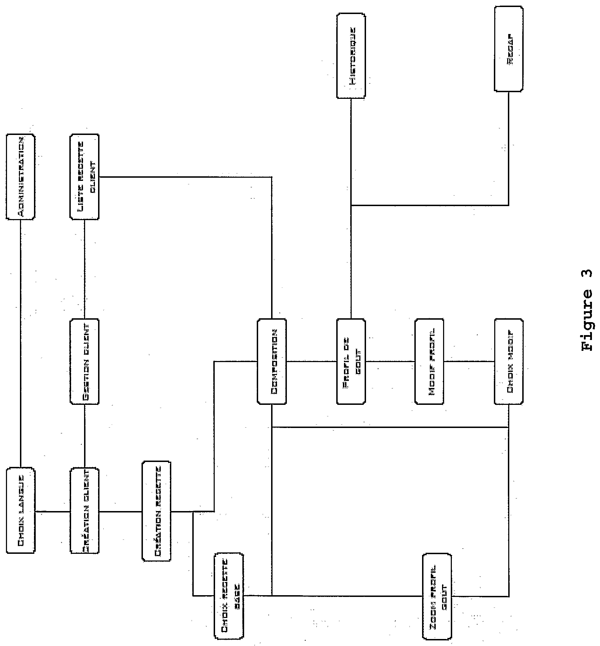

La mise en oeuvre du logiciel comporte les étapes suivantes (voir figure 3):
**1. Choix langue**
**2. Création client**
**3. Création nouvelle recette**
**4. Choix recette de base**
On présente les 6 recettes de base existantes pour ce type de chocolat (noir ou au lait). Chaque recette de base est définie par un nom et la visualisation de son profil de goût (Spider map) . On peut cliquer sur le microscope pour voir le profil de goût en zoom (sans modification possible). Sinon en cliquant sur la recette, on fait un choix de la composition de départ de la recette. On peut aussi faire un choix de la "méthode empirique" : création d'une base par un assemblage choisi par le créateur.

### 5. Composition

Sur cet écran, l'utilisateur peut ajouter des chocolats ou des masses de cacao. Dès que sa composition atteint les 100%, il peut voir le profil de goût de sa recette. A chaque modification, on garde l'historique de ces modifications.

### 6. Profil de goût

Il s'agit d'un affichage des valeurs calculées de chaque descripteur de goût de la recette et mis en forme sur un polygone. On peut demander à modifier un descripteur de goût ou valider la recette.

### 7. Historique

Cela permet de revoir toutes les modifications enregistrées et revenir à l'état avant l'une de ces modifications.

### 8. Impression et récap

Impression : A tout moment de l'élaboration de la recette, le créateur peut cliquer sur Impression. L'ordinateur transforme l'assemblage en recette bvasée sur un volume total de 500g (modifiable), afin qu'il puisse réaliser cet assemblage et le goûter.

Récap : Si l'utilisateur choisi de valider sa recette, il accède à un récapitulatif de sa recette avec la possibilité d'imprimer un certificat. La recette ne sera plus modifiable, ni recalculée.

### 9. Modif profil

L'utilisateur modifie une intensité de descripteur de goût (augmentation ou diminution) à l'aide d'une réglette. Si on valide sa modification, le logiciel propose de 1. à 3 recettes répondant à la valeur déterminée sur le descripteur choisi.

### 10. Gestion client

### 11. Liste recette client

Permet de voir la liste des recettes du client courant. En sélectionnant une recette de la liste, on peut, si la recette n'est pas validée, la modifier (accès à sa composition), la supprimer. Si une recette est déjà validée, on peut la dupliquer, revoir le récapitulatif et imprimer un certificat.

### Algorithme proposition recette après modification d'un profil (figure 2)

### Diminution de l'intensité d'un descripteur

On propose une seule recette : on choisit parmi les chocolats déjà présents dans la recette, celui ayant la valeur la plus faible pour le descripteur de goût visé et celui ayant la valeur la plus forte. On diminue de 1% la proportion de celui ayant la plus forte valeur, on augmente de 1% celle du chocolat ayant la plus faible valeur et on évalue si on a atteint la valeur désirée. Si ce n'est pas le cas, on recommence.

### Augmentation l'intensité d'un descripteur

On propose 3 recettes : parmi tous les chocolats de la banque, on ajoute à la recette le chocolat ayant la plus forte valeur pour le descripteur de goût visé et on diminue la proportion du chocolat déjà présent dans la recette qui a la plus faible valeur pour ce même descripteur. Cette augmentation/diminution est effectuée par pas de 1% et dès l'obtention de la valeur désirée, on arrête l'incrémentation.

La valeur désirée est considérée comme atteinte dès que la différence entre la valeur désirée et la valeur calculée paraît acceptable.

Bien entendu, il sera possible d'ajouter aux recettes définies des saveurs particulières supplémentaires comme des goûts de fruits rouges, de vanille...

### Exemple 5: Déroulement d'une séance de création d'un chocolat au sein du dispositif selon l'invention : le laboratoire

### Les bases

Le processus de création débute par la dégustation d'assemblages pré-définis, extrêmement « typé » afin d'orienter le créateur : les bases. Cette phase est non contraignante.

Ces bases ont été réalisées afin de présenter des profils de goût affichant la combinaison des descripteurs de goût les plus discriminants/dominants du chocolat :

**Exemples de bases**

| Bases Chocolat Noir | | Bases Chocolat au lait | |
|---|---|---|---|
| Base | Attributs composés | Base | Attributs composés |
| N°1 | Amer&Fruitée | N°1 | Léger. lactée |
| N°2 | Grillée&Amer | N°2 | Moyen. lactée |
| N°3 | Fruitée&Acide | N°3 | Fort. Lactée |
| N°4 | Acide&Amer | N°4 | Léger. lactée&caramel |
| N°5 | Fruitée&Grillée | N°5 | Moyen. lactée&caramel |
| N°6 | Grillêe&Acide | N°6 | Fort. lactée&caramel |

### Le choix de la base et la formalisation

Le client est dans la partie création théorique du laboratoire.

Il déguste les bases afin de choisir à partir de laquelle il va débuter sa recette. Il peut également choisir un chocolat pure origine, ou élaborer lui-même une recette de manière empirique, qui constituera sa base de départ.

Une fois défini le choix de la base, son assemblage et profil de goût apparaissent sur l'écran tactile du laboratoire.

### De la base au brief...

Le brief est le souhait d'évolution de la recette à un instant T.

Cette évolution se traduit par:
→ Le souhait d'ajouter une proportion donnée d'un ingrédient défini (méthode empirique), à partir des informations communiquées sur celui-ci:
   ▪ Information gustative : chacun des composants est disponible à la dégustation, sur des présentoirs.
   ▪ Information littéraire : chaque présentoir présente le profil de goût du composant, des informations complémentaires sur les autres caractéristiques de goût, la composition du chocolat (% de cacao et beurre de cacao), et la variété prédominante de fèves de cacao utilisées.
   ▪ Information visuelle : un grand planisphère présente les différents pays producteurs de cacao, avec pour les pays d'origine des chocolats pure origine, l'indication précise des cultures de cacaoyers, afin d'apprécier les différents éléments géographiques et climatiques qui peuvent influer la typicité du cacao.
→ La volonté de connaître les assemblages qui permettraient la détermination de la valeur d'un descripteur de goût en particulier (méthode analytique):
   ▪ Pour une recette de chocolat noir, tous les descripteurs de goût peuvent faire l'objet d'une variation volontaire de leur valeur par le créateur.
   ▪ En revanche, pour une recette de chocolat au lait, les goûts « Lacté » et « Miel/Caramel » ne peuvent faire l'objet d'une variation volontaire de leur valeur si les ingrédients d'assemblage sont des chocolats noir et des masses de cacao. En effet, ceux-ci n'ont pas de valeur « Lactée » et « Miel/Caramel ». Ces valeurs sont alors déterminées une fois pour toute par la base lactée sélectionnée.

### Du brief à la traduction...

La traduction est la résultante de l'exécution du brief. Elle est la prise en compte de la modification de la recette d'assemblage, et la mise à jour du profil de goût.

Cette formalisation se fait sur l'écran tactile. Une fois faite, un nouveau brief peut être donné et une nouvelle traduction s'opérera.
→ Méthode empirique: entrée du brief dans le programme du logiciel et mise à jour automatique du profil de goût
→ Méthode Analytique: 3 étapes
   ▪ La sélection sur le profil de goût du descripteur de goût pour lequel le créateur souhaite déterminer sa valeur.
   ▪ La traduction est alors la proposition de 3 assemblages différents, si cela est possible, permettant tous les 3 d'atteindre la valeur du descripteur souhaitée, mais avec des différents ingrédients. Selon l'ingrédient et sa proportion d'ajout/de retrait proposée, les autres descripteurs de goût évolueront différemment. Les 3 propositions présentent le profil de goût mis à jour du nouvel assemblage.
   ▪ Le créateur choisi une des 3 propositions et le profil de goût se met à jour conformément. Le créateur peut également choisir de refuser ces propositions.

### De la traduction à l'assemblage ...

Une fois les différents briefs traduits, le créateur imprime sa recette d'assemblage. Les proportions dé chaque ingrédient de la recette sont ramenées à des poids, pour une production d'1kg de recette.

Dans la partie application du laboratoire, le créateur utilise un orgue à chocolats pour doser au gramme près sa recette d'assemblage. L'orgue délivre en forme de petites pastilles les composants dans leur proportion souhaitée.

Le créateur rassemble les composants ainsi pesés dans un cul de poule.

Le cul de poule est placé dans un incubateur qui va fondre les pastilles. Après brassage, l'assemblage est réalisé.

Le créateur peut alors goûter le fruit de sa création. S'il n'est pas satisfait, il retourne dans la partie création du laboratoire pour modifier sa recette, à partir de là où il l'a laissé.

S'il est satisfait, il va travailler avec ce chocolat pour le mettre en application en chocolaterie et/ou en pâtisserie, grâce à l'équipement disponible.

Si sa satisfaction est totale, il valide la recette. Celle-ci n'est alors plus modifiable par quiconque et lui est garantie exclusive à partir de sa première fabrication, par exemple pour une durée limitée figurée dans son contrat de fabrication.

## Revendications

1. Procédé par ordinateur d'élaboration d'une recette de chocolat et/ou d'une composition chocolatée/cacaotée à partir d'une banque de n ingrédients Pⱼ, les ingrédients Pⱼ désignant notamment un chocolat ou une masse de cacao, **caractérisé en ce que**
- on définit une échelle de valeur E permettant d'attribuer une valeur numérique vᵢⱼ pour le descripteur de goût Gᵢ de chaque ingrédient Pⱼ, l'ensemble des valeurs vᵢⱼ définissant le profil de goût (s) de l' ingrédient Pⱼ,
- on détermine une fonction f, telle que v_{ic}=f(kⱼ, vᵢⱼ), f désignant l'ensemble des règles permettant de calculer les valeurs v_{ic} caractérisant le goût d'un assemblage C de chocolats et/ou masses de cacao tel que C= ∑(j=0→n) kⱼPⱼ, kⱼ, compris entre 0 et 1, bornes incluses, étant un coefficient désignant la proportion de l'ingrédient Pⱼ dans l'assemblage C,
- on choisit une base chocolat ou masse de cacao B, dont les valeurs v_{ib} ont été définies,
- on utilise la fonction f pour déterminer les nouvelles valeurs des coefficients kⱼ, vᵢⱼ dans la mise en oeuvre de deux méthodes alternatives a et/ou b telles que :
a. on choisit la nouvelle valeur v_{lb}' du descripteur de goût G_{I} que l'on souhaite modifier dans la base B, on applique une étape de transformation dans laquelle on modifie au moins deux coefficients kⱼ que l' on calcule afin que f(kⱼ, vₗⱼ) atteigne la valeur v_{lb}', puis on calcule l'ensemble des valeurs v_{ib}' des descripteurs de goût Gᵢ, résultant de la modification des coefficients kⱼ,
b. on modifie au moins deux coefficients kⱼ de la base B puis, on calcule l'ensemble des valeurs v_{ib}' des descripteurs de goût Gᵢ.

2. Procédé selon la revendication 1, **caractérisé en ce que** les méthodes a et b sont utilisées séparément ou alternativement et peuvent être répétées jusqu'à l'obtention d'un assemblage C au profil de goût satisfaisant.

3. Procédé selon la revendication 1 ou 2, **caractérisé en ce que** l'étape de transformation de la méthode a. est réalisée comme suit :
- quand v_{lb}' > f(kⱼ, vₗⱼ) , alors on choisit parmi les ingrédients Pⱼ possédant une valeur vᵢⱼ > v_{lb}' au moins un ingrédient Pₛₑₗ₊, et l' on calcule la (les) valeur (s) kₛₑₗ+ de (des) l' ingrédient (s) Pₛₑₗ₊ devant être introduit (s) dans la base B permettant d'atteindre la valeur "1b" puis la(les) valeur (s) kₛₑₗ₊ ayant été déterminée (s) et au moins une valeur kⱼ modifiée, dans laquelle j≠sel+ on calcule ensuite éventuellement l'ensemble des nouvelles valeurs v_{ib}' pour les autres descripteurs de goût Gᵢ, définissant ainsi le nouveau profil de goût (s) du chocolat B' obtenu,
- quand v_{lb}' < f(kⱼ, vᵢⱼ), alors on choisit parmi les ingrédients Pⱼ possédant une valeur vₗⱼ < v_{lb}' au moins un ingrédient Pₛₑₗ-, et l' on calcule la (les) valeur (s) kₛₑₗ- de (des) l'ingrédient (s) Pₛₑₗ- devant être introduit (s) dans la base B permettant d'atteindre la valeur v_{lb}' , puis la (les) valeur (s) kₛₑₗ- ayant été déterminée (s) et au moins une valeur kⱼ modifiée, dans laquelle j≠sel-on calcule ensuite éventuellement l'ensemble des nouvelles valeurs v_{ib}' pour les autres descripteurs goûts Gᵢ, définissant ainsi le nouveau profil de goût (s) du chocolat B' obtenu.

4. Procédé selon la revendication 3, **caractérisé en ce qu'**au cours de l'étape de transformation,
- on note Pⱼ^{sup} les ingrédients Pⱼ qui ont une valeur vₗⱼ > v_{lb}',
- on augmente un ou plusieurs des coefficients kⱼ des ingrédients Pⱼ^{sup} d'une valeur ε, on choisit parmi les ingrédients Pⱼ pour lesquels kⱼ?0, ceux qui ont une valeur vₗⱼ < v_{lb}' que l' on note Pⱼ ^{inf}, on diminue un ou plusieurs des coefficients kⱼ des ingrédients Pⱼ^{inf} d'une valeur ε, de telle manière que la somme des coefficients kⱼ reste égale à 1, puis on réitère q fois jusqu'à ce que |v_{lb}'- f(kⱼ, vₗj) |< δ.

5. Procédé selon la revendication 3, **caractérisé en ce qu'**au cours de l'étape de transformation,
- on note Pⱼ^{inf} les ingrédients Pⱼ qui ont une valeur vₗⱼ < v_{lb}',
- on augmente un ou plusieurs des coefficients kⱼ des ingrédients Pⱼ^{inf} d'une valeur ε, on choisit parmi les ingrédients Pⱼ pour lesquels kⱼ?0, ceux qui ont une valeur vₗⱼ > v_{lb}' que l' on note Pⱼ^{sup}, on diminue un ou plusieurs des coefficients kⱼ des ingrédients Pⱼ^{sup} d'une valeur ε, de telle manière que la somme des coefficients kⱼ reste égale à 1, puis on réitère q fois jusqu' à ce que |v_{lb}'- f(kⱼ, vₗⱼ)|<δ.

6. Procédé selon la revendication 4 et/ou 5, **caractérisé en ce qu'**on choisit un unique Pⱼ^{sup} et/ou un unique Pⱼ^{inf} .

7. Procédé selon la revendication 6, **caractérisé en ce que** la méthode utilisée est répétée avec un Pⱼ^{sup} et/ou un Pj^{inf} différent afin de proposer plusieurs solutions pour une même valeur v_{lb}' donnée.

8. Procédé selon l'une quelconque des revendications précédentes, **caractérisé en ce qu'**au cours de l'étape de transformation si v_{lb}' > f(kⱼ, vᵢⱼ), alors on choisit un Pⱼ^{sup} pour lequel kⱼ = ou ≠ 0 et si v_{lb'} < f(kⱼ, vᵢⱼ) alors on choisit un Pⱼ^{sup} pour lequel kⱼ≠0.

9. Procédé selon l'une quelconque des revendications 1 à 8, **caractérisé en ce que** pour l'élaboration d'un chocolat noir, les descripteurs de goût Gᵢ sont choisis parmi le groupe contenant cacao, amer, sucré, acide, fruité, potassé, torréfié, gras, fumé, brûlé, alcool, médicament, café, persistant, astringent, carton, grillé, aromatique, pour l'élaboration d'un chocolat au lait, les descripteurs Gᵢ sont choisis parmi le groupe contenant lait, sucré, cacao, piquant, gras, caramel, noisette, vanille, miel, biscuité, rance, fumé, astringent, carton, et pour l'élaboration d'un chocolat blanc, les descripteurs Gᵢ sont choisis parmi le groupe contenant lait, sucré, vanille, miel, caramel, fruité, alcool, piquant, cuit, rance.

10. Procédé selon l'une quelconque des revendications précédentes, **caractérisé en ce que** les descripteurs Gᵢ sont utilisés en outre pour caractériser la texture du chocolat.

11. Procédé selon l'une quelconque des revendications précédentes, **caractérisé en ce que** les ingrédients Pⱼ comprennent deux catégories, les ingrédients issus de chocolats P_{choc} et les ingrédients issus de masses de cacao Pₘₐₛₛ •

12. Procédé selon la revendication 11, **caractérisé en ce que** dans un premier temps, on utilise uniquement des ingrédients P_{choc} dans la méthode a. et des ingrédients P_{choc} et Pₘₐₛₛ dans la méthode b.

13. Procédé selon l'une des revendications 4 et 5 en combinaison avec la revendication 12, **caractérisé en ce que** dans un second temps, dans la méthode a, lorsque l'augmentation ou la diminution de la proportion kⱼ d'un ingrédient Pⱼ^{sup} ou Pⱼ^{inf} ne permet pas d'atteindre la valeur v_{lb}' désirée, on complète l'ingrédient P_{choc} par un ingrédient Pmass.

14. Procédé selon la revendication 11, **caractérisé en ce que** les ingrédients Pⱼ comprennent une troisième catégorie, appelés additifs, sous la forme de chocolats aromatisés, de compositions chocolatées ou d'arômes et que les descripteurs Gᵢ sont également utilisés pour quantifier l'intensité des arômes additionnels.

15. Logiciel pour la mise en oeuvre du procédé selon l'une quelconque des revendications 1 à 14.

## Patentansprüche

1. Computerverfahren zum Entwickeln eines Schokoladenrezepts und/oder einer Schokoladen-/Kakao-Zusammensetzung ausgehend von einer Bank von n Zutaten Pⱼ, wobei die Zutaten Pⱼ insbesondere eine Schokolade oder Kakaomasse bezeichnen, **dadurch gekennzeichnet, dass**
- eine Werteskala E definiert wird, die ermöglicht, jeder Zutat Pⱼ einen numerischen Wert vᵢⱼ für die Geschmacksdeskriptoren Gᵢ zuzuweisen, wobei die Gesamtheit von Werten vᵢⱼ das Geschmacksprofil der Zutat Pⱼ definiert,
- eine Funktion f bestimmt wird, derart, dass v_{ic} = f(kⱼ, vᵢⱼ) , wobei f die Gesamtheit von Regeln bezeichnet, die ermöglichen, die Werte v_{ic} zu berechnen, die den Geschmack einer Zusammenstellung C aus Schokoladen und/oder Kakaomassen kennzeichnen, derart, dass C = ∑(j = 0 →n) kⱼPⱼ, wobei kⱼ, der im Bereich von 0 bis 1 einschließlich der Grenzen liegt, ein Koeffizient ist, der den Anteil der Zutat Pⱼ in der Zusammenstellung C bezeichnet,
- eine Schokoladen- oder Kakaomassen-Basis B gewählt wird, deren Werte v_{ib} definiert worden sind,
- die Funktion f verwendet wird, um die neuen Werte der Koeffizienten kⱼ, vᵢⱼ bei der Ausführung zweier alternativer Verfahren a und/oder b so zu bestimmen, dass:
a. der neue Wert v_{ib}' des Geschmacksdeskriptors Gₗ, der in der Basis B modifiziert werden soll, gewählt wird, ein Transformationsschritt angewendet wird, in dem wenigstens zwei Koeffizienten kⱼ, die berechnet werden, damit f(kⱼ, vᵢⱼ) den Wert v_{ib}' erreicht, modifiziert werden, und dann die Gesamtheit von Werten v_{ib}' von Geschmacksdeskriptoren Gᵢ berechnet wird, was die Modifikation der Koeffizienten kⱼ ergibt,
b. wenigstens zwei Koeffizienten kⱼ der Basis B berechnet werden und dann die Gesamtheit der Werte v_{ib}' von Geschmacksdeskriptoren Gᵢ berechnet wird.

2. Verfahren nach Anspruch 1, **dadurch gekennzeichnet, dass** die Verfahren a und b getrennt oder abwechselnd verwendet werden und so lange wiederholt werden können, bis eine Zusammenstellung C mit dem zufriedenstellenden Geschmacksprofil erhalten wird.

3. Verfahren nach Anspruch 1 oder 2, **dadurch gekennzeichnet, dass** der Transformationsschritt des Verfahrens a. wie folgt ausgeführt wird:
- wenn v_{ib}' > f(kⱼ, vₗⱼ), dann wird unter den Zutaten Pⱼ, die einen Wert vₗⱼ > v_{lb}' besitzen, wenigstens eine Zutat Pₛₑₗ₊ gewählt und werden der eine oder die mehreren Werte kₛₑₗ₊ der einen oder der mehreren Zutaten Pₛₑₗ₊ berechnet, die in die Basis B eingegeben werden müssen, um den Wert v_{ib}' erreichen zu können, anschließend wird, wenn der eine oder die mehreren Werte kₛₑₗ₊ bestimmt worden sind und wenigstens ein Wert kⱼ, in dem j ≠ sel+, modifiziert worden ist, eventuell die Gesamtheit neuer Werte v_{ib}' für die anderen Geschmacksdeskriptoren Gᵢ berechnet, wodurch das neue Geschmacksprofil der erhaltenen Schokolade B' definiert wird,
- wenn v_{lb}' < f(kⱼ, vₗⱼ), dann wird unter den Zutaten Pⱼ, die einen Wert vᵢⱼ < v_{ib}' besitzen, wenigstens eine Zutat Pₛₑₗ₋ gewählt und werden der eine oder die mehreren Werte kₛₑₗ- der einen oder der mehreren Zutaten Pₛₑₗ₋ berechnet, die die Basis B eingegeben werden müssen, um den Wert v_{ib}' erreichen zu können, anschließend wird, wenn der eine oder die mehreren Werte kₛₑₗ- bestimmt worden sind und wenigstens ein Wert kⱼ, in dem j ≠ sel-, modifiziert worden ist, eventuell die Gesamtheit neuer Werte v_{ib}' für die anderen Geschmacksdeskriptoren Gᵢ berechnet, wodurch das neue Geschmacksprofil der erhaltenen Schokolade B' definiert wird.

4. Verfahren nach Anspruch 3, **dadurch gekennzeichnet, dass** im Verlauf des Transformationsschrittes
- die Zutaten Pⱼ, die einen Wert vₗⱼ > v_{lb}' haben, mit Pⱼ^{sup} bezeichnet werden,
- ein oder mehrere der Koeffizienten kⱼ der Zutaten Pⱼ^{sup} um einen Wert ε erhöht werden, unter den Zutaten Pⱼ, für die kⱼ?0, jene gewählt werden, die einen Wert vₗⱼ < v_{lb}' besitzen, die mit Pⱼ^{inf} bezeichnet werden, ein oder mehrere der Koeffizienten kⱼ der Zutaten Pⱼ^{inf} um einen Wert ε verringert wird, derart, dass die Summe der Koeffizienten kⱼ gleich 1 bleibt, woraufhin q mal iteriert wird, bis |v_{lb}' - f(kⱼ, vₗⱼ) < δ.

5. Verfahren nach Anspruch 3, **dadurch gekennzeichnet, dass** im Verlauf des Transformationsschrittes
- die Zutaten Pⱼ, die einen Wert vₗⱼ < v_{lb}' haben, mit Pⱼ^{inf} bezeichnet werden,
- ein oder mehrere der Koeffizienten kⱼ der Zutaten Pⱼ^{inf} um einen Wert ε erhöht werden, unter den Zutaten Pⱼ, für die kⱼ?0, jene gewählt werden, die einen Wert vₗⱼ > v_{lb}' besitzen, die mit Pⱼ^{sup} bezeichnet werden, ein oder mehrere der Koeffizienten kⱼ der Zutaten Pⱼ^{sup} um einen Wert ε verringert werden, derart, dass die Summe der Koeffizienten kⱼ gleich 1 bleibt, woraufhin q mal iteriert wird, bis |v_{lb}' - f(kⱼ, vₗⱼ) |< δ.

6. Verfahren nach Anspruch 4 und/oder 5, **dadurch gekennzeichnet, dass** ein eindeutiges Pⱼ^{sup} und/oder ein eindeutiges Pⱼ^{inf} gewählt werden.

7. Verfahren nach Anspruch 6, **dadurch gekennzeichnet, dass** die verwendete Methode mit unterschiedlichen Pⱼ^{sup} und/oder Pⱼ^{inf} wiederholt werden, um für denselben angegebenen Wert v_{lb}' mehrere Lösungen vorzuschlagen.

8. Verfahren nach einem der vorhergehenden Ansprüche, **dadurch gekennzeichnet, dass** während des Transformationsschrittes dann, wenn v_{lb}' > f(kⱼ, vᵢⱼ), ein Pⱼ^{sup} gewählt wird, für das kⱼ = oder ≠ 0, und dann, wenn v_{lb}' < f(kⱼ, vᵢⱼ), ein Pⱼ^{sup} gewählt wird, für das kⱼ ≠ 0.

9. Verfahren nach einem der Ansprüche 1 bis 8, **dadurch gekennzeichnet, dass** für die Entwicklung einer dunklen Schokolade die Geschmacksdeskriptoren Gᵢ aus der Gruppe gewählt werden, die Folgendes enthält: kakaoartig, bitter, süß, sauer, fruchtig, alkalisch, geröstet, fett, rauchig, gebrannt, alkoholisch, medizinisch, kaffeeartig, beständig, adstringierend, pappartig, gegrillt, aromatisch, für die Entwicklung einer Milchschokolade die Geschmacksdeskriptoren Gᵢ aus der Gruppe gewählt werden, die Folgendes enthält: milchartig, süß, kakaoartig, prickelnd, fett, karamellartig, nussartig, vanilleartig, honigartig, bisquitartig, ranzig, rauchig, adstringierend, pappartig, und für die Entwicklung einer weißen Schokolade die Geschmacksdeskriptoren Gᵢ aus der Gruppe gewählt werden, die Folgendes enthält: milchartig, süß, vanilleartig, honigartig, karamellartig, fruchtig, alkoholisch, prickelnd, gekocht, ranzig.

10. Verfahren nach einem der vorhergehenden Ansprüche, **dadurch gekennzeichnet, dass** die Geschmacksdeskriptoren Gᵢ außerdem verwendet werden, um die Textur der Schokolade zu kennzeichnen.

11. Verfahren nach einem der vorhergehenden Ansprüche, **dadurch gekennzeichnet, dass** die Zutaten Pⱼ zwei Kategorien umfassen, nämlich die Zutaten P_{choc}, die von Schokolade stammen, und die Zutaten Pₘₐₛₛ, die von Kakaomasse stammen.

12. Verfahren nach Anspruch 11, **dadurch gekennzeichnet, dass** zu einer ersten Zeit in der Methode a. ausschließlich die Zutaten P_{choc} und in der Methode b. ausschließlich die Zutaten Pₘₐₛₛ verwendet werden.

13. Verfahren nach einem der Ansprüche 4 und 5 in Kombination mit Anspruch 12, **dadurch gekennzeichnet, dass** zu einer zweiten Zeit in der Methode a. dann, wenn die Erhöhung oder die Verringerung des Anteils kⱼ einer Zutat Pⱼ^{sup} oder Pⱼ^{inf} nicht erlaubt, den gewünschten Wert v_{lb}' zu erreichen, die Zutat P_{choc} durch eine Zutat Pₘₐₛₛ ergänzt wird.

14. Verfahren nach Anspruch 11, **dadurch gekennzeichnet, dass** die Zutaten Pⱼ eine dritte Kategorie umfassen, die Additive genannt wird und die Form aromatisierter Schokoladen, Schokoladenzusammensetzungen oder Aromen hat, und dass die Deskriptoren Gᵢ auch verwendet werden, um die Intensität zusätzlicher Aromen zu quantifizieren.

15. Software für die Ausführung des Verfahrens nach einem der Ansprüche 1 bis 14.

## Claims

1. Computer-based method for preparing a recipe for chocolate and/or a chocolate/cocoa composition from a bank of n ingredients Pⱼ, the ingredients Pⱼ referring in particular to a chocolate or a cocoa mass, **characterised in that**:
- a scale of values E is defined making it possible to assign a numerical value vᵢⱼ for the taste descriptor Gᵢ of each ingredient Pⱼ, the set of values vᵢⱼ defining the taste profile of the ingredient Pⱼ,
- a function f is determined, such that v_{ic} = f(kⱼ, vᵢⱼ), f designating the set of rules used to calculate the values v_{ic} characterising the taste of a blend C of chocolates and/or cocoa masses such that C = ∑(j= 0→n) kⱼPⱼ, kⱼ, between 0 and 1, inclusive, being a coefficient designating the proportion of ingredient Pⱼ in the blend C,
- a chocolate or cocoa mass base B is selected, the values v_{ib} of which have been defined,
- the function f is used to determine the new values of the coefficients kⱼ, vᵢⱼ in the implementation of two alternative methods a and/or b, such that:
a. the new value v_{ib}' of the taste descriptor Gᵢ to be modified in base B is selected, a conversion step is applied in which at least two coefficients kⱼ are modified and calculated so that f(kⱼ, vᵢⱼ) reaches value v_{ib}', then the set of values v_{ib}' of taste descriptors Gᵢ is calculated, resulting from the modification of coefficients kⱼ,
b. at least two coefficients kⱼ of base B are modified, then the set of values v_{ib}' of taste descriptors Gᵢ is calculated.

2. Method according to claim 1, **characterised in that** methods a and b are used separately or alternately and can be repeated until a blend C having a satisfactory taste profile is obtained.

3. Method according to either claim 1 or claim 2, **characterised in that** the conversion step of method a. is performed as follows:
- when v_{ib}' > f(kⱼ, vᵢⱼ), at least one ingredient Pₛₑₗ₊ is selected from among the ingredients Pⱼ having a value vᵢⱼ > v_{ib}', and the value(s) kₛₑₗ₊ of the ingredient(s) Pₛₑₗ₊ to be introduced into the base B in order to reach the value v_{lb}' is/are calculated, then once the value(s) kₛₑₗ₊ have been determined and at least one value kⱼ has been modified, in which j ≠ sel+, the set of new values v_{ib}' for the other taste descriptors Gᵢ are now calculated if necessary, thereby defining the new taste profile of the chocolate B' obtained,
- when v_{ib}' < f(kⱼ, vᵢⱼ), at least one ingredient Pₛₑₗ₋ is selected from among the ingredients Pⱼ having a value vᵢⱼ < v_{ib}', and the value(s) kₛₑₗ₋ of the ingredient(s) Pₛₑₗ- to be introduced into the base B in order to reach the value v_{ib}' is/are calculated, then once the value(s) kₛₑₗ-have been determined and at least one value kⱼ has been modified, in which j ≠ sel-, the set of new values v_{ib}' for the other taste descriptors Gᵢ are now calculated if necessary, thereby defining the new taste profile of the chocolate B' obtained.

4. Method according to claim 3, **characterised in that**, during the conversion step,
- the ingredients Pⱼ having a value vᵢⱼ > v_{ib}' are denoted Pⱼ^{sup}**,**
- one or more of the coefficients kⱼ of the ingredients Pⱼ^{sup} is/are increased by a value ε, those ingredients having a value vᵢⱼ < v_{ib}' which are denoted Pⱼ^{inf} are selected from among the ingredients Pⱼ for which kⱼ?0, one or more of the coefficients kⱼ of the ingredients Pⱼ^{inf} is/are reduced by a value ε, such that the sum of the coefficients kⱼ remains equal to 1, this being repeated q times until |v_{ib}' - f(kⱼ, vᵢⱼ)| < δ.

5. Method according to claim 3, **characterised in that**, during the conversion step,
- the ingredients Pⱼ having a value vᵢⱼ > v_{ib}' are denoted Pⱼ^{sup},
- one or more of the coefficients kⱼ of the ingredients Pⱼ^{inf} is/are increased by a value ε, those ingredients having a value vᵢⱼ < v_{ib}' which are denoted Pⱼ^{sup} are selected from among the ingredients Pⱼ for which kⱼ?0, one or more of the coefficients kⱼ of the ingredients Pⱼ^{sup} is/are reduced by a value ε, such that the sum of the coefficients kⱼ remains equal to 1, this being repeated q times until |v_{ib}' - f(kⱼ, vᵢⱼ)| < δ.

6. Method according to claim 4 and/or claim 5, **characterised in that** a single Pⱼ^{sup} and/or a single Pⱼ^{inf} is/are selected.

7. Method according to claim 6, **characterised in that** the method used is repeated using a different Pⱼ^{sup} and/or Pⱼ^{inf} in order to propose a plurality of solutions for the same given value v_{ib}'.

8. Method according to any of the preceding claims, **characterised in that**, during the conversion step, if v_{ib}' > f(kⱼ, vᵢⱼ) then a **Pⱼ^{sup}** is selected for which kⱼ = or ≠ 0 0 and if v_{ib}' < f(kⱼ, vᵢⱼ) then a Pᵢ^{sup} is selected for which kⱼ ≠ 0.

9. Method according to any of claims 1 to 8, **characterised in that** in order to prepare a dark chocolate, the taste descriptors Gᵢ are selected from the group containing cocoa, bitter, sweet, acid, fruity, potash, fired, fatty, smoked, burnt, alcohol, medicine, coffee, persistent, astringent, cardboard, grilled and aromatic, in order to prepare a milk chocolate the descriptors Gᵢ are selected from the group containing milk, sweet, cocoa, sharp, fatty, caramel, hazelnut, vanilla, honey, biscuity, rancid, smoked, astringent and cardboard, and in order to prepare a white chocolate, the descriptors Gᵢ are selected from the group containing milk, sweet, vanilla, honey, caramel, fruity, alcohol, sharp, cooked and rancid.

10. Method according to any of the preceding claims, **characterised in that** the descriptors Gᵢ are also used in order to characterise the chocolate texture.

11. Method according to any of the preceding claims, **characterised in that** the ingredients Pⱼ comprise two categories, the ingredients derived from chocolates P_{choc} and the ingredients derived from cocoa masses Pₘₐₛₛ.

12. Method according to claim 11, **characterised in that**, initially, only ingredients P_{choc} are used in method a. and ingredients P_{choc} and Pₘₐₛₛ are used in method b.

13. Method according to either claim 4 or claim 5 in combination with claim 12, **characterised in that**, secondly, in method a., when the desired value v_{ib}' cannot be reached by increasing or reducing the proportion kⱼ of an ingredient Pⱼ^{sup} or Pⱼ^{inf}, an ingredient Pₘₐₛₛ is added to the ingredient P_{choc}.

14. Method according to claim 11, **characterised in that** the ingredients Pⱼ include a third category, referred to as additives, in the form of flavoured chocolates, chocolate compositions, or aromas, and **in that** the descriptors Gᵢ are also used to quantify the intensity of the additional aromas.

15. Software for implementing the method according to any of claims 1 to 14.
